# EUROPEAN PATENT APPLICATION

(11) **EP 1 686 762 A1**
(43) Date of publication of application: **02.08.2006**
(21) Application number: 06300055.8
(22) Date of filing: 23.01.2006
(51) Int. Cl.: H04L 29/06, H04L 12/413, H04L 12/46, H04L 12/66

(54) **Communication protocol interface**

(30) Priority: 27.01.2005 US 44479
(71) Applicant: Alcatel, 75008 Paris (FR)
(72) Inventor: Mac Donald, Aaron Maxwell, K2G 6N5, Ottawa (CA); White, Tim, K1Z 1C5, Ottawa (CA); Anastasiadis, Chris, K2M 1G2, Ottawa (CA)
(74) Representative: Hervouet, Sylvie

(57) **Abstract**

Communication protocol interface systems and methods are disclosed. A predetermined type of content of communication traffic of a first communication protocol, illustratively control information, is translated into a corresponding type of content of communication traffic of a second communication protocol. The translated communication traffic is transferred to a first component of a communication device, which is configured to transfer the corresponding type of content to a second component of the communication device. The second component is configured for processing the predetermined type of content. In some embodiments, other types of content are translated for direct processing by the first component. Mechanisms are thereby provided, for example, for transferring control information through a packet processor to a host processor, while allowing data to be processed normally by the packet processor.

## Description

### Field of the Invention

This invention relates generally to communications and, in particular, to providing interfaces between diverse communication protocols.

### Background

Many modern communication systems aggregate different communication protocols. Cost sensitive aggregation solutions often employ multiple interface technologies to satisfy communication network engineering objectives and customer demands.

Common interface technologies include Synchronous Optical Network (SONET), which is typically used for relatively large backbone communication networks, and Ethernet, which is more commonly used to implement less expansive communication networks such as Local, Wide, and Metropolitan Area Networks (LANs, WANs, and MANs). So-called Packet Over SONET (POS) has become very popular for transmitting Internet Protocol (IP) datagrams over SONET as packets. POS uses Point-to-Point Protocol (PPP) to establish links and allow data to flow. PPP has long been used as a standard mechanism for transporting multi-protocol datagrams over point-to-point communication links.

In some communication devices, data and control plane functions are performed by different processors. Packet processors are often used to provide communication traffic queuing, backpressuring, and switching for instance, whereas control functions such as communication link establishment, configuration, and management are handled by a host processor.

A packet processor might provide interfaces for only particular communication protocols and thereby presents a challenge for integration into an aggregation solution in which other protocols or transfer mechanisms are also used. A packet processor which provides only an Ethernet interface cannot simply be integrated into a communication device which is also intended to support POS, for example.

Therefore, there remains a need for interface systems and methods which provide for the use of communication devices having protocol-specific components in multi-protocol aggregated communication systems.

### Summary of the Invention

Embodiments of the invention provide interface mechanisms for adapting protocol-specific communication devices to communication protocols which are not fully supported by all components of the communication devices.

An apparatus for providing a communication protocol interface for a communication device, according to one broad aspect of the present invention, includes a translation module which is configured to identify a predetermined type of content of communication traffic of a first communication protocol, to translate the predetermined type of content into a corresponding type of content of communication traffic of a second communication protocol, and to transfer the communication traffic of the second communication protocol to a first component of the communication device which is configured to transfer the corresponding type of content to a second component of the communication device which is configured for processing the predetermined type of content.

In one embodiment, the translation module comprises a Field Programmable Gate Array (FPGA).

The first communication protocol may be POS, or some other encapsulation over SONET supporting IP datagrams, for example. In one embodiment, the second communication protocol is Ethernet, the predetermined type of content is control information, and the translation module is configured to translate control information by encapsulating an entire control packet into a data field of an Ethernet frame and to set an Ether type of the Ethernet frame to a control type.

Inverse operations may be performed for communication traffic to be transmitted from the communication device. The translation module may thus be further configured to identify the corresponding type of content in communication traffic of the second communication protocol received from the first component of the communication device, and to translate the corresponding type of content into the predetermined type of content of communication traffic of the first communication protocol.

The translation module may also be configured to translate a type of content, such as data content, other than the predetermined type of content, into a corresponding type of content which the first component of the communication device is configured to process.

Another aspect of the invention provides a communication protocol interface system which includes a content identifier and a translator. The content identifier is adapted for identifying a plurality of types of content of communication traffic of a first communication protocol, and the translator is configured to translate the plurality of types of content into respective corresponding types of content of communication traffic of a second communication protocol and to transfer the communication traffic of the second communication protocol to a communication traffic processor which is configured to process communication traffic of at least one of the corresponding types of content and to transfer another of the corresponding types of content to a further processor which is configured for processing the other type of content.

In accordance with another aspect of the invention, a translator for providing an interface to a first communication protocol for a communication traffic processor which supports a second communication protocol includes means for distinguishing control information from other information in communication traffic of the first communication protocol, means for translating communication traffic comprising control information into a predetermined type of communication traffic of the second communication protocol, the predetermined type of communication traffic comprising at least a portion of the control information, and an output for transferring the communication traffic of the second communication protocol to the communication traffic processor. The communication traffic processor is configured to pass the predetermined type of communication traffic to a further processor which is configured to process the control information.

There is also provided a communication device which includes a translator and a packet processor. The translator is configured to translate PPP control packets into Ethernet frames having a PPP control Ether type and to translate PPP data packets comprising any of a plurality of data types into Ethernet frames having respective Ether types corresponding to the data types of the PPP data packets. The packet processor is operatively coupled to the translator and configured to receive the Ethernet frames from the translator, to pass Ethernet frames having the PPP control Ether type to a host processor interface, and to process Ethernet frames having Ether types corresponding to the data types of the PPP data packets.

A method of providing a communication protocol interface for a communication device, according to yet another aspect of the invention, includes operations of encapsulating a predetermined type of information associated with a first communication protocol into a transmission data unit of a second communication protocol, and transferring the transmission data unit, through a component of a communication device which is capable of processing communication traffic of the second communication protocol, to another component of the communication device which is capable of processing the predetermined type of information content and communication traffic of the first communication protocol.

Other aspects and features of the present invention will become apparent to those ordinarily skilled in the art upon review of the following description of specific illustrative embodiments thereof.

### Brief Description of the Drawings

Examples of embodiments of the invention will now be described in greater detail with reference to the accompanying drawings, in which:
Fig. 1 is a block diagram of a communication system in which embodiments of the invention may be implemented;
Fig. 2 is a block diagram of a communication device implementing an embodiment of the invention; and
Fig. 3 is a flow diagram illustrating a method according to a further embodiment of the invention.

### Detailed Description of Preferred Embodiments

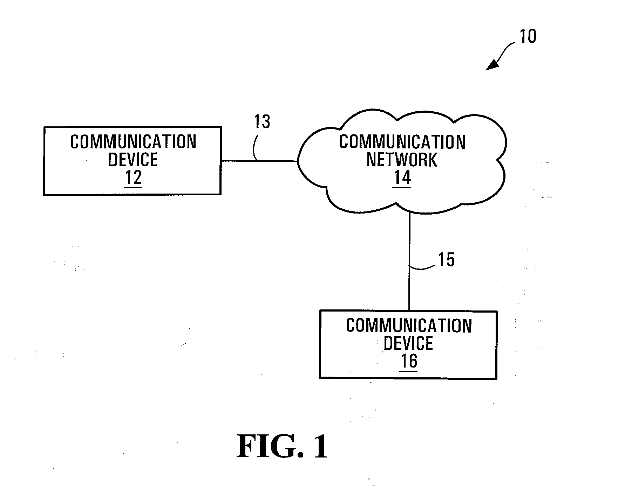

Fig. 1 is a block diagram of a communication system in which embodiments of the invention may be implemented. The communication system 10 in Fig. 1 includes communication devices 12, 16 which are operatively connected to a communication network 14 through communication links 13, 15. Although many communication devices may be connected to the communication network 14, only two communication devices 12, 16 have been shown in Fig. 1 to avoid congestion. It should therefore be appreciated that the communication system 10 of Fig. 1, as well as the contents of the other drawings, are intended solely for illustrative purposes, and that the present invention is in no way limited to the particular example embodiments explicitly shown in the drawings and described herein.

The communication devices 12, 16 may be end user communication devices or possibly provide access to the communication network 14 for one or more other communication devices or even other communication networks. According to one possible implementation of the communication system 10, the communication devices 12, 16 connect to other communication devices which are connected in respective Ethernet networks and transfer communication traffic through the communication network 14 using POS.

One example of the communication devices 12, 16 is a Layer 3 IP switch. Such a switch may be implemented, for instance, on a customer premise by a service provider that has POS interfaces for uplink to network elements of the communication network 14 and Ethernet interfaces which provide a physical attachment to customers. In order to support IP traffic, the Ethernet ports and POS ports are configured for IP forwarding. SONET (OC3-OC12, etc.) would be a typical uplink in North America, as most of the external physical plant for service providers relies upon SONET and not Ethernet layer 2 plant. Ethernet would be commonly implemented internally at customer sites.

Various examples of specific communication equipment which may be used to implement the communication devices 12, 16, the communication links 13, 15, and the communication network 14, as well as the operation thereof, will be apparent to those skilled in the art. Embodiments of the invention may be implemented in conjunction with many different communication protocols and types of communication equipment. Although one embodiment of the invention described in detail herein relates to providing a POS interface in conjunction with an Ethernet packet processor which does not support the PPP encapsulation used in POS, the present invention is not limited to these or any other particular protocols.

More generally, embodiments of the invention may provide a Layer 2 translator between POS and Ethernet, in that Layer 2 is SONET, and Ethernet is effectively used as a Layer 2 protocol on a packet processor for the purpose of forwarding an underlying Layer 3 protocol, which is the common piece of data that is to be forwarded between communication devices. Embodiments of the invention could similarly be applied to virtually any set of Layer 2 protocols, such as to translate a Layer 2 protocol arriving on an interface which is unsupported by a packet processor.

Thus, given the teachings provided herein, a person of skill in the art will be enabled to implement further embodiments of the invention for other protocols or encapsulations, including virtually any encapsulation in the SONET payload. POS and Asynchronous Transfer Mode (ATM), for example, are identified via special identifiers in the SONET payload. The encapsulation described in detail herein for the sole purpose of illustrating example embodiments of the invention is POS, which is PPP over SONET. The techniques disclosed herein could similarly be applied to translate ATM to Ethernet, for example, if needed. In this case, a packet processor could still be forwarding IP at Layer 3.

As described above, a communication device 12, 16 may include components which either do not support multiple communication protocols, or do not support a particular communication protocol which is used in a communication system. One commercially available family of packet processors, for example, provides only Ethernet interfaces. These packet processor cannot process PPP encapsulated packets used in POS, or any other SONET-based encapsulation which supports Layer 3 IP datagrams. A communication device which incorporates this type of packet processor thus requires a workaround to support POS interfaces.

However, as also described briefly above, a communication device having a packet processor may also have a host processor, which tends to be more generic than a packet processor. It is thus possible that a host processor in a communication device may support at least control functions for communication protocols which are not fully supported by a packet processor in the same communication device. In accordance with an embodiment of the invention, the capabilities of a host processor are exploited to effectively extend the protocol support provided by an otherwise protocol-specific communication device.

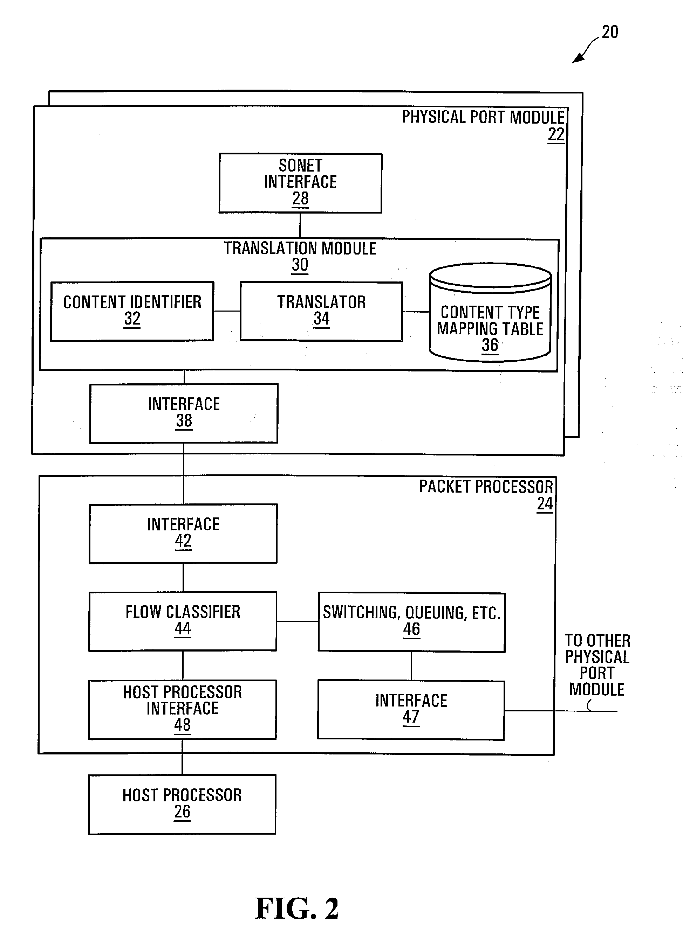

Fig. 2 is a block diagram of a communication device implementing an embodiment of the invention. The communication device 20 includes one or more physical port modules 22, a packet processor 24, and a host processor 26. A communication device implementing other embodiments of the invention may include further, fewer, or different components which may be connected differently than explicitly shown in Fig. 2.

The physical port module 22 includes a SONET interface 28, a translation module 30, and a further interface 38. SONET interfaces are well known in the art. The interface 38 may also be a known type of interface, such as an industry standard Media Independent Interface (MII), Gigabit MII (GMII), or Serial GMII (SGMII).

A content identifier 32, a translator 34, and a content type mapping table 36 in the translation module 30 operate as described in further detail herein to adapt the communication device 20 for operation with a communication protocol, illustratively POS, which is not supported by a component of the device. In one embodiment of the invention, the content identifier 32 and the translator 34 are implemented using a Field Programmable Gate Array (FPGA), and the content type mapping table 36 is stored in a solid state memory device in the communication device 20. Other implementations of the translation module 30, in an Application Specific Integrated Circuit (ASIC), Digital Signal Processor (DSP), or software for execution by a processor for instance, are also contemplated.

The packet processor 24 includes interfaces 42 and 47, a flow classifier 44, functional components generally designated 46 for performing such functions as switching, queuing, bridging, routing, and/or forwarding, and a host processor interface 48. Those skilled in the art will be familiar with commercially available packet processors having a high-level architecture substantially similar to the packet processor 24.

As described briefly above, the packet processor 24 may handle data functions, whereas the additional host processor 26, typically a microprocessor, provides control functions. The operation of the host processor 26 may be implemented in software stored in a memory (not shown) of the communication device 20. Where the communication device 20 is an electronic device such as a computer system having an Ethernet card, the host processor 26 will normally be a shared microprocessor which also performs other functions.

In the communication device 20, the packet processor 24 provides an interface 42, an Ethernet interface for example, and thus would normally handle only Ethernet communication traffic, not PPP encapsulation as used in POS. According to an aspect of the invention, the translation module 30 translates PPP communication traffic into Ethernet communication traffic.

Various aspects of PPP and Ethernet are described herein only to the extent necessary to illustrate embodiments of the invention. PPP and Ethernet are both well known in the art.

PPP communication traffic may include Link Control Protocol (LCP) and Network Control Protocol (NCP) control packets destined for a host processor and data packets to be routed or bridged by a PPP packet processor. PPP packets include a code or type field identifying the type of packet. An LCP code field of 1, for example, identifies an LCP packet as a configure-request packet.

On ingress of PPP encapsulated communication traffic to the communication device 20 through the SONET interface 28, the content identifier 32 determines a type of content included in the communication traffic, based on the PPP type field for instance. Any non-POS/PPP packets received by the content identifier 32 are preferably discarded.

The translator 34 encapsulates at least data from PPP data packets into Ethernet frames, the basic transmission data unit for Ethernet, which are sent to the packet processor 24 through the interface 38. An Ether type used in an Ethernet frame generated by the translator 34 may be determined based on a direct mapping from PPP data types to Ether types. A PPP to Ether type mapping may be stored in a mapping table as shown at 36, in which case the mapping table is accessed by the translator 34 to determine the Ether type to be indicated in generated Ethernet frames.

In the case of a PPP control packet, the entire PPP packet, including the protocol field, the information field, and the padding field, if present, is preferably encapsulated into the data field of an Ethernet frame having the Ether type for PPP control, 0x880B. A new unique Ether type may instead be allocated and used in Ethernet frames which include PPP control packets.

The translation module 30 may also perform additional functions, including adding a Layer 2 Ethernet header and calculating Frame Check Sequences (FCSs) on Ethernet frames which it generates. This Layer 2 header may, but need not necessarily, be a unique header used by the translator 34.

Data packets are also translated into Ethernet packets by the translator 34. For data, however, a different Ether type is preferably used. At least the information field of a PPP data packet is encapsulated into the data field of an Ethernet frame. A standard Ether type, such as 0x0800 for an IP datagram, or possibly a new unique Ether type, is set in the generated Ethernet frame. In one embodiment, Ether types corresponding to PPP data types are stored in the content type mapping table 36 and accessed by the translator 34.

At the packet processor 24, the generic flow classifier 44 is configured to "trap" or pass to the host processor interface 48, and thus the host processor 26, all Ethernet frames received through the interface 42 with an Ether type "PPP control". Ethernet frames which include PPP data packets are processed as normal Ethernet frames by the packet processor 24 at 46, and queued for transmission toward a destination through the interface 47, for example.

In this manner, even though the packet processor 24 cannot itself process PPP control information, encapsulation of PPP control packets in Ethernet frames allows the PPP control packets to be passed through the packet processor 24 to another component of the communication device 20, specifically the host processor 26, which can process PPP control information.

In an embodiment of the invention described above, the packet processor 24 appropriately forwards Ethernet packets to the host processor 26 based on Ether type. Other embodiments are also contemplated, such as using special addresses or encoding in either Ethernet destination or source address fields to control processing of Ethernet frames which include PPP control and data by the packet processor 24.

The translation of PPP packets into Ethernet frames for processing by the packet processor 24 instead of separating PPP control and data packets at the translation module 30 for direct processing by another packet processor or the host processor 26 allows PPP communication traffic to benefit from existing queuing, backpressuring, and other functions provided by the packet processor 24.

Another advantage of processing PPP packets as part of the normal data path, as opposed to creating a separate data path from the translation module 30 to the host processor 26 is that data packets can benefit from normal quality of service (QoS), denial of service (DOS), distributed DOS, and Access Control List (ACL) features that would be applied to pure Ethernet packets processed by the packet processor 24.

The above functions would otherwise either be duplicated in the communication device 20 or lost for PPP communication traffic.

The host processor 26 is configured, by executing software for example, to process received PPP control packets. In the device 20, PPP control packets are received by the host processor 26 within Ethernet frames. PPP control for POS is thereby logically provided between the host processor 26 and a remote peer communication device. The remote communication device may either natively support PPP using a different type of packet processor or have a structure similar to the communication device 20. Implementation of an embodiment of the invention at a communication device at one end of a PPP/POS link is thus independent of the type of device and PPP processing provided at the other end of the link.

Processing of received PPP control packets by the communication device 20 according to an aspect of the invention has been described above. PPP and thus POS also involves transmission of PPP control packets from the communication device 20, during PPP link establishment for instance. A PPP control packet generated by the host processor 26 for transmission to a remote peer communication device is preferably provided to the packet processor 24 as a fully formed PPP control packet contained in the data field of an Ethernet frame. As with received PPP control packets, an Ethernet frame which encapsulates a PPP control packet generated by the host processor 26 has an Ether type "PPP control". The host processor 26 thus also provides protocol interface and translation functions in respect of outgoing PPP control packets. Data such as IP or Multi-Protocol Label Switching (MPLS) datagrams originating with the host processor 26 or received by the host processor 26 from other components (not shown) on the access side of the packet processor 24 is inserted into the data fields of Ethernet frames and sent with the proper Ether type for the data.

In a transmission direction, all Ethernet frames are processed at 46 in substantially the same manner, regardless of whether they encapsulate PPP control packets or data packets. Ethernet frames are queued and transmitted through the interface 47 to a physical port module, which may or may not have a structure similar to the physical port module 22. It will be apparent, however, that Ethernet frames which include information destined for a remote communication device via POS are forwarded to an interface which is connected to a physical port module having a translator.

Ethernet frame forwarding in this manner may be controlled, for example, by using a port-based addressing scheme supported by the packet processor 24 to ensure that packets leaving the host processor 26 are forwarded to a particular port. In other embodiments, a similar addressing scheme could be used if supported by a packet processor, or other information, such as the Ethernet destination address for example, may be used to control processing of outgoing Ethernet frames by a packet processor.

Ethernet frames received from the packet processor 24 are processed by a translation module in a physical port module connected to the interface 47. Initial processing of received Ethernet frames may include such operations as checking Ethernet FCSs. A content identifier, or a substantially similar module configured to handle Ethernet frames, determines the Ether type of each received Ethernet frame.

For the PPP control Ether type, a PPP control packet is entirely contained in the Ethernet data field. The translation module strips the Ethernet header, trailer, and padding fields, for example, to thereby extract the PPP control packet from the Ethernet frame, and adds a POS header, trailer, and padding for transmission. FCS generation and possibly other relevant PPP/POS operations may also be performed for outgoing PPP control packets.

Non-PPP control Ether types may be directly mapped to a PPP type in a mapping table, as described above with reference to the mapping table 36. A PPP type corresponding to the Ether type in a received Ethernet frame is set in a PPP packet, and the data field of the Ethernet frame is effectively copied directly to the information field of the PPP packet. This may be accomplished by stripping the header, trailer, and padding fields from the Ethernet frame and adding PPP packet fields and POS frame fields, for instance. As for PPP control packets, FCS generation and/or other relevant PPP/POS operations may be performed for PPP data packets.

As shown in Fig. 2, the communication device 20 may include multiple physical port modules 22, to respectively handle incoming and outgoing communication traffic for instance. Thus, the functions of identifying or distinguishing between different types of content and translating identified content types may be handled by one translation module 30 for incoming PPP traffic and by another translation module in a separate physical port module for outgoing PPP traffic received from the packet processor 24 as Ethernet frames. It should be appreciated, however, that embodiments in which the same hardware or functions handle both incoming and outgoing communication traffic are also contemplated.

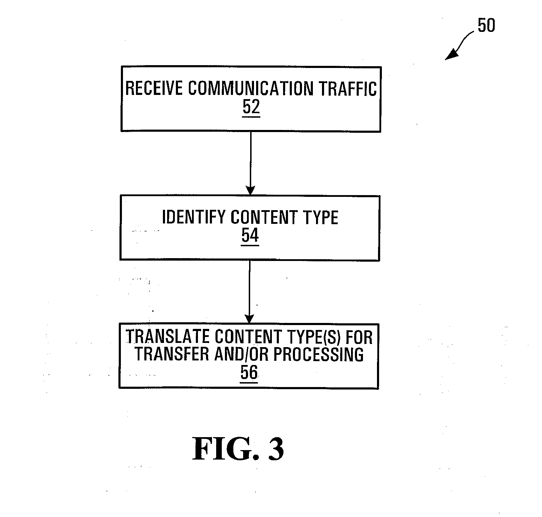

Embodiments of the invention which provide a communication protocol interface for a communication device in which different components support different communication protocols have been described above primarily in terms of a system. Fig. 3 is a flow diagram illustrating a method according to a further embodiment of the invention.

The communication protocol interfacing method 50 in Fig. 3 begins at 52 with receiving communication traffic, illustratively PPP packets. At 54, a type of content of the received communication traffic is identified. The method 50 then proceeds at 56 with translating identified content types either for transfer through one component of a communication device to another component for processing, or for direct processing by a component of the communication device. In the case of a PPP control packet, for example, the operation at 56 may involve translating the content for transfer through an Ethernet packet processor to a host processor. For a PPP data packet on the other hand, the packet is translated into an Ethernet frame for processing by the packet processor, as described above.

It should be appreciated that the method 50 as shown in Fig. 3 is also representative of operations which may be performed for communication traffic which originates with a communication device, in that device-originating communication traffic may also be translated. In the above example of enabling an Ethernet communication device for POS, a translation module may receive Ethernet frames from a packet processor at 52, determine whether the Ethernet frames include data or PPP control at 54, and translate the Ethernet frames into PPP packets accordingly at 56.

Various possible ways of performing the operations in the method 50 have been disclosed herein, and others will be apparent to those skilled in the art. Methods according to other embodiments of the invention may also include further or fewer operations than those explicitly shown in Fig. 3.

Embodiments of the present invention thus provide a cost-effective POS solution by using, in combination, an off-the-shelf packet processor which does not support PPP links required for POS, and a custom translator, illustratively an FPGA, to provide translation to support the PPP links.

What has been described is merely illustrative of the application of principles of the invention. Other arrangements and methods can be implemented by those skilled in the art without departing from the scope of the present invention.

For example, the system 10 of Fig. 1 includes a communication network 14 through which communication traffic is exchanged between communication devices 12, 16. The present invention may, however, be implemented in conjunction with other types of communication link, which need not necessarily traverse a network.

The present invention is also not restricted to any particular transfer mechanisms or physical media, and may be used with wired or wireless communication links for instance.

In the embodiment of Fig. 2, a translation module 30 is shown as being incorporated into a communication device 20. According to another contemplated embodiment, a translation module and any associated physical interfaces are provided as a separate device, such as an interface adapter which may be connected to a communication device.

In addition, although described primarily in the context of methods and systems, other implementations of the invention are also contemplated, as instructions stored on a machine-readable medium, for example.

## Claims

1. An apparatus for providing a communication protocol interface for a communication device, the apparatus comprising:
a translation module configured to identify a predetermined type of content of communication traffic of a first communication protocol, to translate the predetermined type of content into a corresponding type of content of communication traffic of a second communication protocol, and to transfer the communication traffic of the second communication protocol to a first component of the communication device which is configured to transfer the corresponding type of content to a second component of the communication device which is configured for processing the predetermined type of content.

2. The apparatus of claim 1, wherein the translation module comprises a Field Programmable Gate Array (FPGA).

3. The apparatus of claim 1 or claim 2, wherein:
the first communication protocol comprises an encapsulation over Synchronous Optical Network (SONET) supporting Internet Protocol (IP) datagrams;
the second communication protocol comprises Ethernet;
the predetermined type of content comprises control information; and
the translation module is configured to translate control information by encapsulating an entire control packet into a data field of an Ethernet frame and to set an Ether type of the Ethernet frame to a control type.

4. The apparatus of claim 1 or claim 2, wherein the translation module is further configured to identify the corresponding type of content in communication traffic of the second communication protocol received from the first component of the communication device, and to translate the corresponding type of content into the predetermined type of content of communication traffic of the first communication protocol.

5. The apparatus of claim 1 or claim 2, wherein the translation module is further configured to translate a type of content, other than the predetermined type of content, of communication traffic of the first communication protocol into a corresponding type of content of communication traffic of the second communication protocol which the first component of the communication device is configured to process.

6. A communication device comprising:
a packet processor and a host processor supporting respective communication protocols; and
the apparatus of any one of claims 1 to 5.

7. A communication protocol interface system comprising:
a content identifier for identifying a plurality of types of content of communication traffic of a first communication protocol; and
a translator configured to translate the plurality of types of content into respective corresponding types of content of communication traffic of a second communication protocol and to transfer the communication traffic of the second communication protocol to a communication traffic processor which is configured to process communication traffic of at least one of the corresponding types of content and to transfer another of the corresponding types of content to a further processor which is configured for processing the other type of content.

8. The system of claim 7, wherein the translator is configured to translate the plurality of types of content by encapsulating the plurality of types of content into respective types of transmission data units of the second communication protocol.

9. The system of claim 8, wherein:
the plurality of types of content comprises control information and data;
the translator is configured to encapsulate control information by encapsulating an entire transmission data unit of the first communication protocol into a transmission data unit of the second communication protocol and setting a content type of the transmission data unit of the second communication protocol to the other corresponding type of content which the communication traffic processor is configured to pass to the further processor; and
the translator is further configured to encapsulate data by encapsulating a portion of a transmission data unit of the first communication protocol into a transmission data unit of the second communication protocol and setting a content type of the transmission data unit of the second communication protocol to one of the at least one corresponding type of content which the communication traffic processor is configured to process.

10. The system of claim 7 or claim 8, wherein:
the content identifier is further configured to identify a plurality of types of content of communication traffic of the second communication protocol received from the communication traffic processor; and
the translator is further configured to translate the plurality of types of content of the communication traffic received from the communication traffic processor into respective corresponding types of content of communication traffic of the first communication protocol.

11. The system of any one of claims 7, 8, and 10, wherein the plurality of types of content of the communication traffic received from the communication traffic processor comprises control information and data.

12. The system of any one of claims 7 to 11, wherein the communication traffic processor comprises a packet processor, and wherein the further processor comprises a host processor in conjunction with which the packet processor is adapted to operate.

13. A translation system for providing an interface to a first communication protocol for a communication traffic processor which supports a second communication protocol, the translation system comprising:
means for distinguishing control information from other information in communication traffic of the first communication protocol;
means for translating communication traffic comprising control information into a predetermined type of communication traffic of the second communication protocol, the predetermined type of communication traffic comprising at least a portion of the control information; and
an output for transferring the communication traffic of the second communication protocol to the communication traffic processor, the communication traffic processor being configured to pass the predetermined type of communication traffic to a further processor which is configured to process the control information.

14. The translation system of claim 13, wherein the means for distinguishing and the means for translating are implemented in hardware, software which when executed performs at least one of the functions of distinguishing and translating, or a combination thereof.

15. The translation system of claim 13 or claim 14, wherein the further processor is configured to generate control information associated with the first communication protocol and to output the generated control information to the communication traffic processor in the predetermined type of communication traffic of the second communication protocol, the translation system further comprising:
an input for receiving communication traffic of the second communication protocol from the communication traffic processor;
means for distinguishing the generated control information from other information in communication traffic of the second communication protocol received from the communication traffic processor; and
means for translating communication traffic comprising the generated control information into a predetermined type of communication traffic of the first communication protocol, the predetermined type of communication traffic of the first communication protocol comprising at least a portion of the generated control information.

16. The translation system of claim 13 or claim 14, wherein the means for translating is further configured to translate communication traffic comprising another type of content than control information into a corresponding type of communication traffic of the second communication protocol which the communication traffic processor is configured to process.

17. A communication device comprising:
a translator configured to translate Point-to-Point (PPP) control packets into Ethernet frames having a PPP control Ether type and to translate PPP data packets comprising any of a plurality of data types into Ethernet frames having respective Ether types corresponding to the data types of the PPP data packets; and
a packet processor operatively coupled to the translator and configured to receive the Ethernet frames from the translator, to pass Ethernet frames having the PPP control Ether type to a host processor interface, and to process Ethernet frames having Ether types corresponding to the data types of the PPP data packets

18. The communication device of claim 17, further comprising:
a host processor operatively coupled to the host processor interface and configured to process the Ethernet frames having the PPP control Ether type.

19. The communication device of claim 17 or claim 18, wherein at least the translator and the packet processor are implemented on an electronic circuit card.

20. A method of providing a communication protocol interface for a communication device, the method comprising:
encapsulating a predetermined type of information associated with a first communication protocol into a transmission data unit of a second communication protocol; and
transferring the transmission data unit, through a component of a communication device which is capable of processing communication traffic of the second communication protocol, to another component of the communication device which is capable of processing the predetermined type of information content and communication traffic of the first communication protocol.

21. A machine-readable medium storing instructions which when executed perform the method of claim 20.
